# EUROPÄISCHE PATENTSCHRIFT

(11) **EP 0 879 559 B1**
(45) Veröffentlichungstag und Bekanntmachung des Hinweises auf die Patenterteilung: **06.11.2002**
(21) Anmeldenummer: 97108419.9
(22) Anmeldetag: 24.05.1997
(51) Int. Cl.: A22C 7/00, B65B 31/04

(54) **Verfahren und Vorrichtung zur Herstellung von Verpackungen mit Lebensmittel**
Method and device for making packages with foodstuffs
Procédé et dispositif pour la fabrication d'emballages à denrées alimentaires

(43) Veröffentlichungstag der Anmeldung: 25.11.1998
(73) Patentinhaber: Dixie-Union GmbH & Co. KG, 87437 Kempten (DE)
(72) Erfinder: Send, Dietmar, 87471 Durach (DE); Kortschak, Fritz, 14089 Berlin (DE)
(74) Vertreter: Pfister, Helmut, Dipl.-Ing.

(56) Entgegenhaltungen:
- EP-A- 0 212 201
- DE-A- 19 518 168
- US-A- 2 128 735
- US-A- 4 744 130
- US-A- 5 375 631

## Beschreibung

Die Erfindung betrifft ein Verfahren und eine Vorrichtung zur Herstellung von Verpackungen mit Lebensmitteln, wobei das Lebensmittel in die Form einer Unterfolie eingebracht wird und die Form von einem Stempel mindestens teilweise abgedeckt wird.

Aus der deutschen Patentameldung 195 181 68.9 ist ein(e) gattungsgebende(s) Vorrichtung und Verfahren bekannt geworden.

Hierbei wird eine Füllstation vorgeschlagen, die kammerartig ausgestattet ist und ein Oberteil und ein Unterteil aufweist. In muldenartigen Formen einer Unterfolie wird Brät eingefüllt und mittels eines Stempels in die Form eingedrückt. Anschließend erfolgt eine Versiegelung mit einer Oberfolie.

Die beschriebenen Verpackungen sind beliebt, da diese es erlauben, das zu verpackende Lebensmittel, zum Beispiel Würstchen ohne zusätzliche Wursthäute, Därme, Kunstdärme und so weiter verkaufsfertig zu machen. Die ausgeformte Vertiefung in der Unterfolie entspricht dabei der endgültigen Form der Fertigprodukte, zum Beispiel mehrere nebeneinanderliegender, sich aber nicht berührender Bratwürstchen. Diese befüllte Unterfolie wird nach dem Befüllen mit einer Oberfolie überzogen, evakuiert und die Folien werden dann so miteinander verschweißt, daß jeder Rohling vollständig dicht umhüllt ist. Anschließend kann die Packung erhitzt werden, um eine Konservierung zu erreichen.

Der Vorteil eines derartigen Verfahrens besteht darin, daß die einzelnen Fertigprodukte nach der Umhüllung durch die beiden Folien nicht mehr von der Hand berührt werden und eine Rekontamination nach dem Erhitzungsvorgang ausgeschlossen ist. Es wird eine sehr gute Haltbarkeit erreicht, wobei der sonst übliche Darm eingespart wird und noch dazu eine hygienische und einfache Portionierung möglich ist, da die einzeln verschweißten Würste je nach Bedarf geöffnet werden können, ohne dabei eine "große Packung" öffnen zu müssen.

Aus der vorgenannten Druckschrift ist es bekannt, die Form durch den Stempel zu verdecken oder abzuschließen. Das in die Form bereits eingefüllte Lebensmittel wird durch den Stempel in die Form ganz eingedrückt, wodurch eventuell bestehende Luftblasen oder Hohlräume ganz ausgefüllt werden und eine vollständige Befüllung der Form erreicht wird. Gerade die unter Umständen zurückbleibenden Luftblasen oder Hohlräume sind nachteilig, da in diese Hohlräume nach dem Erhitzen Gelee oder Fett eindringen kann, welche dann unter Umständen an der Verpackungsoberfläche sichtbar sind und somit die Verpackungsgestaltung beeinträchtigen. Es ist auch möglich, daß solche Hohlräume im Inneren des verpackten Lebensmittels entstehen, wodurch dann die Konsistenz des Lebensmittels in diesem Bereich nachteilig verändert wird.

Aus der US-PS 4,744,130 ist eine Befüllvorrichtung für eine Lebensmittelmasse bekannt, bei der das Ende eines Einfüllrohres in eine Form eingefahren ist und unter Zurückziehen der Form dieses Ende sich immer in Höhe des Niveaus des Lebensmittels befindet.

Das Einfüllrohr ist von einem in seinem Durchmesser variablen Stempel umgeben, der die Masse nach oben abdeckt.

Zwischen Stempel und Form findet während des Befüllvorgangs eine Relativbewegung statt, die eine recht aufwendige Konstruktion der Befüllanlage voraussetzt und ein nur langsames Befüllen der Form erlaubt.

Die vorliegende Erfindung hat es sich zur Aufgabe gemacht, das Verfahren und die eingangs beschriebene Vorrichtung dahingehend weiterzuentwickeln, daß der Befüllvorgang bzw. der Verpackungsvorgang rationalisiert bzw. beschleunigt wird.

Gelöst wird diese Aufgabe durch ein Verfahren wie eingangs vorgeschlagen, wobei während des Einbringens des Lebensmittels in die Form der Stempel auf dem Öffnungsrand der Form aufsitzt.

Durch diese Maßnahme wird eine erhebliche Beschleunigung des Befüllvorganges erreicht. Die Funktion des Stempels, nämlich das Niederdrücken und wahlweise auch vollständige Abdichten, wird beibehalten, wobei die bekannten Vorteile des Stempels, insbesondere aus den vorgenannten Druckschriften, weiter genützt werden. Das Lebensmittel wird in die Form eingebracht, wobei zum Beispiel der Stempel hierzu eine Einfüllöffnung aufweist. Es ist aber auch möglich, eine andere Ausgestaltung zu wählen, um den erfindungsgemäßen Effekt zu realisieren. Zum Beispiel ist vorgesehen, daß neben dem Stempel eine Einfülldüse vorgesehen ist, die getrennt von dem Stempel ausgebildet ist, und das zähflüssige Lebensmittel in das Forminnere eindrückt. Für den erfindungsgemäßen Erfolg ist es auch nicht notwendig, daß der Stempel die Form dicht verschließt. Der Stempel hat weiterhin zunächst die Aufgabe, das eingebrachte Lebensmittel so in die Form einzudrücken, daß diese ganz ausgefüllt wird. Der Druck, der hierbei auf das Lebensmittel ausgeübt wird, um dieses in die Form zu fördern, dient hier auch gleichzeitig als Kraft, die gegen den Stempel wirkt und so eine entsprechende dichte Ausfüllung ergibt.

Durch den erfindungsgemäßen Vorschlag wird der Befüllvorgang deutlich beschleunigt, da im Vergleich mit dem bekannten Verfahren mindestens ein Verfahrensabschnitt eingespart wird. Bislang war es bekannt, zunächst die Form zu befüllen und dann den Stempel einzusetzen. Durch die Maßnahme, daß die Form befüllt wird, wenn gleichzeitig die Form durch den Stempel abgedichtet oder verschlossen ist, wird ein entsprechender Zeitvorteil erreicht.

Ein weiterer Vorteil der erfindungsgemäßen Ausgestaltung liegt darin, daß zuverlässig vermieden wird, daß Brät- oder Lebensmittelreste beim Befüllen an den Siegelflächen in Kontakt kommen und an diesen anliegen, diese bedecken und dadurch den Siegelungsvorgang behindern.

In der bevorzugten Ausgestaltung der Erfindung ist vorgesehen, daß der Stempel die Form dicht verschließt. Es wird somit vermieden, daß Brät an Undichtigkeiten herausquillt und die Vorrichtung beschmutzt. Durch das Abdichten kann das Forminnere auch evakuiert werden, zum Beispiel vor, während oder nach dem Befüllvorgang.

Es ist auch vorgesehen, daß der Druck in dem von dem Stempel abgedichteten Formvolumen durch eine Entlüftungsöffnung gesteuert, insbesondere durch die Entlüftungsöffnung evakuiert wird. Die Entlüftungsöffnung kann auch dazu dienen, einen Überdruck aufzubauen, um einen zusätzlichen mechanischen Druck auf das einfließende Lebensmittel auszuüben, um eine optimale Ausfüllung der Form zu erreichen. Das Lebensmittel hat hierbei die übliche Konsistenz, es ist im wesentlichen zähflüssig, wobei die Viskosität in einem großen Intervall anzusetzen ist.

Die eingebrachten Lebensmittel sind in der Regel nicht flüssig. Umgekehrt kann durch diese Öffnung auch eine Evakuierung erfolgen, um zum Beispiel die Bildung von Luftblasen und so weiter zu vermeiden. Dies kann insbesondere dann günstig sein, wenn bei dem abschließenden Versiegeln eine weitere Beschleunigung erreicht werden soll. Diese Teilevakuierung bleibt unter Umständen im Lebensmittel aufgrund der Zähheit eine Zeitlang noch bestehen bzw. unterstützt die Evakuierung in einer Versiegelungskammer. Dieser Vorteil ist insbesondere dann zu beachten, wenn die Befüllstation mit einer Versiegelungskammer bzw. Evakuierungskammer kombiniert oder integriert wird.

Bei einer weiteren vorteilhaften Ausgestaltung der Erfindung wird vorgeschlagen, daß vor dem Einfüllen des Lebensmittels in die Form, die Form von dem Stempel bzw. ein Element des Stempels in die Unterfolie tiefgezogen wird. Das Tiefziehen der Unterfolie für das Bilden der Formen wird zum Beispiel mit einer Negativform bewirkt.

Die Erfindung beschränkt sich nicht nur auf das beschriebene Verfahren, sondern beansprucht eine Vorrichtung zur Herstellung von Verpackungen mit Lebensmitteln, wobei die Form der Unterfolie von einem Stempel mindestens teilweise abgedeckt wird. Diese Vorrichtung dient bevorzugt zur Durchführung des vorbeschriebenen Verfahrens. Die Vorrichtung aus dem Stand der Technik wird dahingehend verbessert, daß der Stempel eine Einfüllöffnung für das Lebensmittel aufweist. Die vorbeschriebenen erfindungsgemäßen Vorteile sind auf die Vorrichtung in gleicher Weise übertragbar. Die Einfüllöffnung ist zum Beispiel als Bohrung in den Stempel eingebracht und weist an ihrem, der Form abgewandten Ende, eine Anschlußmöglichkeit für die Befüllmaschine auf.

Für eine genaue Dosierung ist vorgesehen, daß die Einfüllöffnung durch ein steuerbares Ventil schließ- bzw. öffenbar ist.

Ein steuerbares Ventil wird zum Beispiel als Membranventil, welches pneumatisch ansteuerbar ist, ausgebildet. Das Membranventil ist zum Beispiel aus Silikon gefertigt und somit lebensmittelverträglich.

Für eine optimale Abdichtung ist vorgesehen, daß der Stempel Dichtflächen aufweist, die mit den entsprechenden Formflächen zusammenwirken. Die Dichtflächen können zum Beispiel durch entsprechende Abgratungen der Eckbereiche, die mit den Formflächen zusammenwirken, bewirkt werden. Gleichzeitig wird damit auch eine Scharfkantigkeit vermieden, die ansonsten zu Verletzungen, wie Risse oder Schnitte in der Unterfolie führen könnten.

Es ist gefunden worden, daß es von Vorteil ist, wenn der Stempel beheizbar ist, wobei die dem Lebensmittel zugewandte Stempeloberfläche eine Temparatur von ca. 25° bis 45° Celsius, insbesondere von 35° aufweist. Dies wird zum Beispiel durch eine indirekte Heizung, beispielsweise eine beheizte Werkzeug- bzw. Stempelhalterung erreicht, welche dezentral eine Mehrzahl von Stempel beheizt. Die Aufheizung bewirkt, daß sich zwischen dem Stempel und dem Lebensmittel ein Fettfilm bildet, der bei einer Relativbewegung zwischen Stempel und eingefüllten Lebensmitteln ein Anhaften des Lebensmittels an dem Stempel vermeidet.

In weiterer Ausgestaltung der Erfindung ist vorgesehen, daß die Stempeloberfläche konus- bzw. wannenartig ausgestaltet ist und/oder eine Antihaftbeschichtung aufweist. Eine Wurst ist in der Regel zylinderförmig ausgebildet und weist einen im wesentlichen runden Querschnitt auf. Der Kunde möchte natürlich auch bei den vorgeschlagenen Fertigprodukten entsprechend geformte Würste benutzen, wobei die Ausgestaltung der Stempelfläche direkt Einfluss hat auf den oberen Teil des in die Form eingegebenen Lebensmittels, da dieser Bereich von dem Stempel berührt, gepresst und somit auch geformt wird. Eine entsprechende konus- oder wannenartige Ausgestaltung führt dazu, daß die einander anliegenden Lebensmitteloberflächen einen weichen Übergang erfahren. Dies kann sowohl bei der Verpackung von Würsten als auch bei anderen Verpackungsformen, wie zum Beispiel Teigverpackungen etc. von Vorteil sein.

Zusätzlich kann ein Anhaften des Lebensmittels an dem Stempel, zum Beispiel bei einer Freigabebewegung des Stempels, um die befüllte Verpackung weiterzufördern, durch eine Antihaftbeschichtung der Stempeloberfläche, zum Beispiel mit Teflon oder dergleichen, bewirkt werden.

In der bevorzugten Ausgestaltung der Erfindung ist vorgesehen, daß der Stempel eine durch ein Ventil steuerbare Entlüftungsöffnung besetzt ist. Die Entlüftungsöffnung kann dazu dienen, das Forminnere zu evakuieren oder aber mit einem Gegendruck zu beaufschlagen.

In der Zeichnung ist die Erfindung schematisch dargestellt. Es zeigen:
- Fig. 1: in einem horizontalen Schnitt eine Seitenansicht der erfindungsgemäßen Vorrichtung in abgesenkter, die Form verschließende Stellung, und
- Fig. 2: in einem horizontalen Schnitt eine Frontansicht der erfindungsgemäßen Vorrichtung in hochgezogener Stellung.

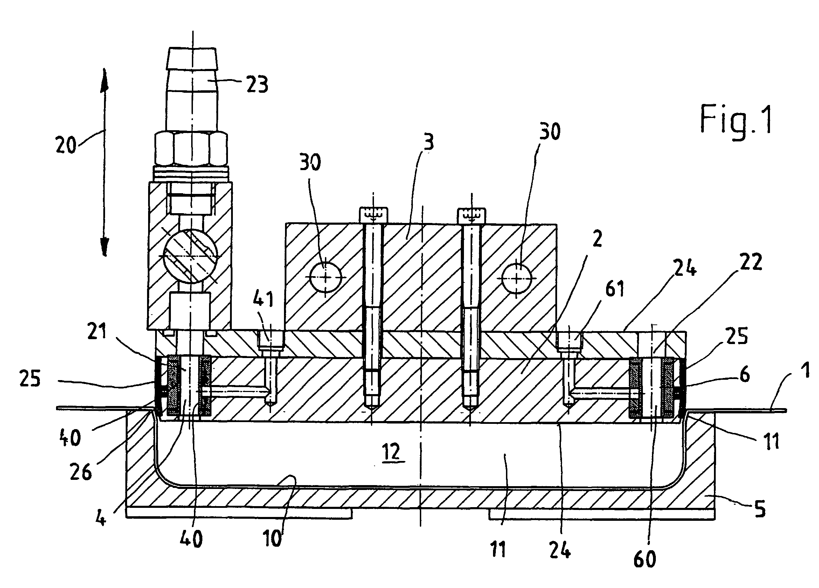

In Fig. 1 ist die erfindungsgemäße Vorrichtung schematisch dargestellt. Die Unterfolie 1 weist eine nach unten ausgestülpte Form 10 auf, die dazu dient, ein zigarren- oder muldenartig ausgestaltetes, beliebiges Lebensmittel, zum Beispiel Rohbrätwürste oder Teig aufzunehmen. Üblicherweise sind die hier zu verpackenden Lebensmittel nicht flüssig. Die Unterfolie 1, bzw. die Form 10 werden unterstützt von einem Unterteil 5, welches entsprechend der Form 10 angepasst ist. Das Unterteil 5 kann zum Beispiel das Unterteil einer Vakuumverpakkungskammer sein bzw. mit diesem zusammenwirken, in diese integriert sein oder dient nur zur mechanischen Unterstützung, wenn das Lebensmittel eingebracht wird. Das Unterteil 5 kann gleichwohl auch für den Tiefziehvorgang zum Bilden der Form 10 dienen. Die erfindungsgemäße Vorrichtung bzw. das Verfahren dient auch für bereits vorgefertigte Unterfolien, die in die Form 10, bevor diese mit Lebensmittel befüllt werden, eingeformt bzw. eingelegt wird.

Der Stempel 2 ist wie in Fig. 1 gezeigt, gegen das Unterteil 5 heruntergefahren. Hierzu dienen zum Beispiel pneumatische oder hydraulische Arbeitszylinder oder elektrische Motoren, die eine Auf- und Abbewegung 20 des Stempels 2 zulassen und bewirken.

In der in Fig. 1 gezeigten abgesenkten Stellung ist der Innenraum 12 der Form 10 vollständig von dem Stempel 2 abgedichtet. Hierbei weist der Stempel an seiner seitlichen, in Fig. 1 vertikal verlaufenden Umrandung eine Dichtfläche 25 auf, die zum Beispiel aus einem Gummiüberzug oder anderem lebensmittelverträglichen Material (Silikon) besteht und mit der Formfläche 11 derart zusammenwirkt, daß eine Abdichtung erreicht wird. Es ist natürlich auch möglich, die Dichtfläche 25 im wesentlichen horizontal auszubilden, um den gleichen Effekt zu erreichen.

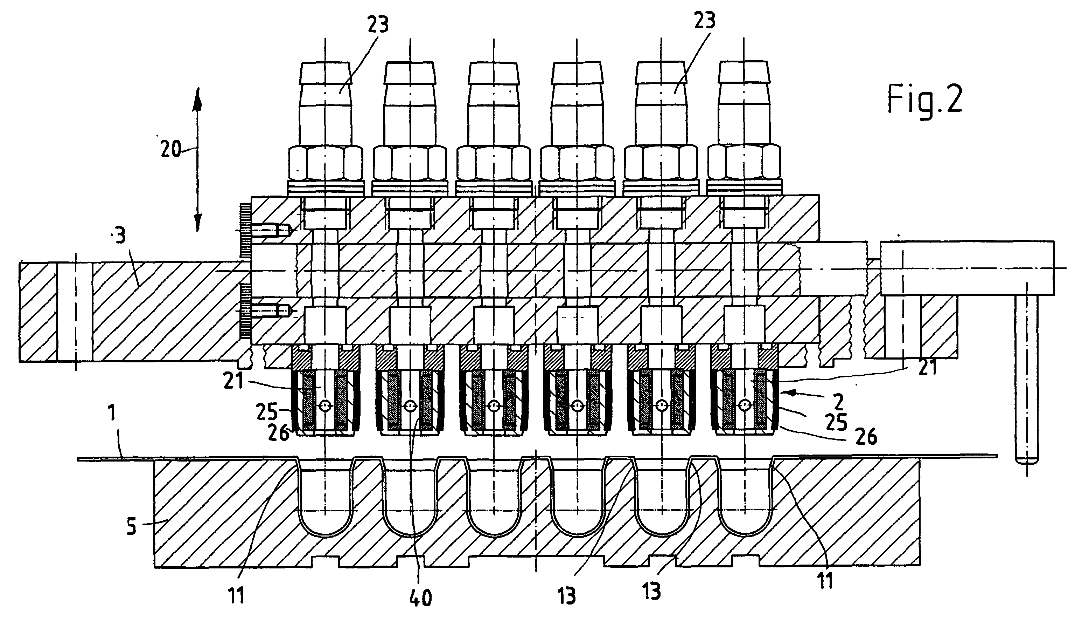

In Fig. 2 ist zum Beispiel angedeutet, daß die Dichtfläche 25 in ihrem unteren Bereich eine leichte Abwinkelung 26 in das Forminnere aufweist. Diese Abwinkelung 26 bewirkt ein konusartiges Anliegen der Dichtflächen 25 an den Formflächen 11.

In gleicher Weise besitzt auch die Form 10 im Querschnitt (siehe Fig. 2) eine konusartige Erweiterung 13, die am oberen Ende der Formflächen 11 angeordnet sind. Durch diese Ausgestaltung wird das Einfüllen des Lebensmittels erleichtert, wie auch ein sicherer Sitz des Stempels 2 auf der Form 10 ermöglicht.

Nachdem die Form 10 mit dem Lebensmittel gefüllt ist, wird diese evakuiert, mit der Oberfolie verschlossen und dann zum Beispiel gekocht oder mit Heißdampf behandelt, um eine Konservierung zu erreichen. Natürlich ist es möglich, während dem Einbringen des Lebensmittels noch zusätzliche Mittel einzubringen, zum Beispiel Flüssigrauch, um den Würstchen einen Rauchgeschmack zu verleihen.

Das Lebensmittel wird durch die Einfüllöffnung 21 durch den Stempel 2 in die Form 10 eingebracht. Die Einfüllöffnung 21 ist zum Beispiel als zur Stempeloberfläche 24 im wesentlichen rechtwinklig angeordnete Bohrung ausgebildet. Sie durchdringt den Stempel 2 vollständig und wird oben von einem Abschlußstutzen 23 abgedeckt, der zum Beispiel durch einen Schlauch oder dergleichen mit einer Befüllmaschine verbunden ist. Die Befüllmaschine bewirkt eine Beförderung des Lebensmittels durch den Anschlußstutzen 23 und der Einfüllöffnung 21 in die Form 10. Im Stempel 2 ist ein Ventil 4 vorgesehen, welches dazu dient, den Einfüllvorgang von Lebensmitteln zu unterbrechen. Dies ist zum Beispiel dann ratsam, wenn ein Formwechsel durchzuführen ist, also die fertig befüllte Form 10 gegen eine noch leere Form ausgetauscht wird.

Der Stempel 2 dient dazu, zum Beispiel im Zusammenwirken mit dem Unterteil 5, daß das einfließende Lebensmittel die Form 10 vollständig ausfüllt, ohne dabei die Unterfolie 1 zu verletzen. Es ist hierbei zu beachten, daß das Lebensmittel unter Umständen mit einem beachtlichen Druck gefördert wird, um die zähflüssigen Stoffe optimal in die Verpackung einzubringen.

Das Ventil 4 wird durch eine Steuerleitung 41, die hier zum Beispiel als pneumatische Leitung ausgebildet ist, angesteuert. Das Ventil 4 ist hierbei als Membranventil 40 ausgebildet und verringert bei Beaufschlagung mit Druckluft seinen Innendurchmesser, wodurch eine Einfüllung unterbunden werden kann. Durch eine entsprechende Dimensionierung wird das Membranventil 40 vollständig verschlossen. Das Membranventil 40 besteht hierbei aus lebensmittelverträglichen Material, zum Beispiel Silikon.

Der Stempel 2 ist im wesentlichen länglich, zum Beispiel für die Befüllung bzw. Gestaltung von Bratwürsten entsprechend ausgebildet. An seinem linken Ende (Fig. 1) ist wie vorbeschrieben das Ventil 4 an der Einfüllöffnung 21 angeordnet. An seinem rechten Ende ist eine Entlüftungsöffnung 22 vorgesehen, die ebenfalls von einem Ventil 6, welches hier ebenfalls durch ein Membranventil 60 realisiert ist, steuerbar ist. Die Entlüftungsöffnung dient für das Austreten von der in dem Innenraum 12 vorhandenen Luft. Durch die Entlüftungsöffnung 22 kann evakuiert werden bzw. ein Gegendruck in den Innenraum 12 eingeprägt werden, um dadurch eine optimale Verteilung des Lebensmittels in dem Innenraum 12 der Form 10 zu erreichen. Das Membranventil 60 wird hierbei von einer Steuerleitung 61, zum Beispiel einer Druckluftleitung oder dergleichen angesteuert.

Die Steuerleitungen 41/61 wirken letztendlich mit der Maschinensteuerung zusammen und bewirken im richtigen Zeitpunkt ein Öffnen oder Verschließen der jeweils angeschlossenen Ventile.

Der Stempel 2 wird von einer Halterung 3 gehalten. Die Halterung 3 trägt hierbei eine Mehrzahl parallel nebeneinander angeordneter Stempel 2, wie dies zum Beispiel in Fig. 2 angedeutet ist. In der Halterung 3 ist zum Beispiel eine Widerstandsheizung 30 vorgesehen, die indirekt die Halterung 3 wie auch die daran angeschlossenen bzw. befestigten Stempel 2 aufheizt. Es ist gefunden worden, daß, wenn die Stempeloberfläche 24 eine etwas erhöhte Temparatur (zum Beispiel zwischen 25° bis 45°) aufweist, ein Anhaften des Lebensmittels an der Stempeloberfläche 24 optimal vermieden wird. Gerade bei 35° ist gefunden worden, daß sich auf der Stempeloberfläche ein Fettfilm bildet, der ein Anhaften von Brät und dergleichen an der Stempeloberfläche 24 zuverlässig vermeidet. Die Heizung kann aber auch in gleicher Weise im Stempel 2 integriert und in anderer Weise ausgebildet sein.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Verfahren zur Herstellung von Verpackungen mit Lebensmitteln, wobei das Lebensmittel in die Form (10) einer Unterfolie (1) eingebracht wird und die Form (10) von einem Stempel (2) mindestens teilweise abgedeckt wird, **dadurch gekennzeichnet, daß** während des Einbringens des Lebensmittels in die Form (10) der Stempel (2) auf dem Öffnungsrand der Form (10) aufsitzt.

2. Verfahren nach Anspruch 1, **dadurch gekennzeichnet, daß** der Stempel (2) die Form (10) dicht verschließt.

3. Verfahren nach einem oder beiden der vorhergehenden Ansprüche, **dadurch gekennzeichnet, daß** vor dem Einfüllen des Lebensmittels in die Form (10) die Form (10) von dem Stempel (2) bzw. einem Element des Stempels (2) in die Unterfolie (1) tiefgezogen wird.

4. Verfahren nach einem oder mehreren der vorhergehenden Ansprüche, **dadurch gekennzeichnet, daß** der Druck in den von dem Stempel (2) abgedichteten Formvolumen durch eine Entlüftungsöffnung (22) gesteuert wird, insbesondere das Forminnere (12) durch die Entlüftungsöffnung (22) evakuiert wird.

5. Verfahren nach einem oder mehreren der vorhergehenden Ansprüche, **gekennzeichnet durch** ein Aufheizen des Stempels auf eine Temperatur von ca. 25°C bis 45°C, insbesondere von 35°C.

6. Vorrichtung zur Herstellung von Verpackungen mit Lebensmitteln, bestehend aus einer eine Unterfolie aufnehmenden Form (10) und einem diese Form (10) zumindest teilweise abdeckenden Stempel (2), wobei der Stempel (2) eine Einfüllöffnung (21) aufweist, durch die das Lebensmittel in die Form einbringbar ist, **dadurch gekennzeichnet, daß** der Stempel (2) beim Einbringen des Lebensmittels auf dem Öffnungsrand der Form (10) aufsitzt.

7. Vorrichtung nach Anspruch 6, **dadurch gekennzeichnet, daß** die Einfüllöffnung (21) durch ein steuerbares Ventil (4) schließ- bzw. öffnenbar ist.

8. Vorrichtung nach einem der beiden Ansprüche 6 oder 7, **dadurch gekennzeichnet, daß** der Stempel (2) Dichtflächen (25) aufweist, die mit entsprechenden Formflächen (11) zusammenwirken.

9. Vorrichtung nach einem oder mehreren der Ansprüche 6 bis 8, **dadurch gekennzeichnet, daß** der Stempel (2) beheizbar ist, wobei die dem Lebensmittel zugewandte Stempeloberfläche (24) eine Temperatur von ca. 25°C bis 45°C, insbesondere von 35°C aufweist.

10. Vorrichtung nach einem oder mehreren der Ansprüche 6 bis 9, **dadurch gekennzeichnet, daß** die Stempeloberfläche (24) konus- bzw. wannenartig ausgestaltet ist und/oder eine Antihaftbeschichtung aufweist.

11. Vorrichtung nach einem oder mehreren der Ansprüche 6 bis 10, **dadurch gekennzeichnet, daß** der Stempel (2) eine durch ein Ventil (6) steuerbare Entlüftungsöffnung (22) besitzt.

## Claims

1. Method for producing packages containing food, the food being introduced into the shape (10) of a lower foil (1) and the shape (10) being at least partly covered by a ram (2), **characterised in that** during the introduction of the food into the shape (10) the ram (2) rests on the edge of the aperture of the shape (10).

2. Method according to claim 1, **characterised in that** the ram (2) closes the shape (10) tightly.

3. Method according to one or both of the preceding claims, **characterised in that** before the food is filled into the shape (10) the shape (10) is thermoformed by the ram (2), respectively an element of the ram (2), into the lower foil (1).

4. Method according to one or more of the preceding claims, **characterised in that** the pressure in the volume of shape sealed by the ram (2) is controlled by a vent opening (22), in particular the interior (12) of the shape is evacuated by the vent opening (22).

5. Method according to one or more of the preceding claims, **characterised in that** the ram is heated up to a temperature of about 25°C to 45°C, in particular 35°C.

6. Apparatus for producing wrappings containing food, comprising a shape (10) which takes a lower foil and a ram (2) which covers this shape (10) at least partially, the ram having a filling opening (21) through which the food can be introduced into the shape, **characterised in that** during the introduction of the food the ram (2) rests on the edge of the aperture of the shape (10).

7. Apparatus according to claim 6, **characterised in that** the filling opening (21) can be opened, respectively closed, by a controllable valve (4).

8. Apparatus according to one or both of the preceding claims 6 or 7, **characterised in that** the ram (2) has sealing surfaces (25) which cooperate with corresponding surfaces (11) of the shape.

9. Apparatus according to one or more of the claims 6 to 8, **characterised in that** the ram (2) can be heated, the surface (24) of the ram which faces the food having a temperature of about 25°C to 45°C, in particular 35°C.

10. Apparatus according to one or more of the claims 6 to 9 **characterised in that** the surface (24) of the ram is of cone or trough-like design and/or has a non-sticking coating.

11. Apparatus according to one or more of the claims 6 to 10, **characterised in that** the ram (2) has a vent opening (22) which can be controlled by a valve (6).

## Revendications

1. Procédé de fabrication d'emballages avec denrées placées dans une forme (10) constituée d'une feuille inférieure (1) et cette forme (10) étant au moins partiellement obturée par un tampon (2), **caractérisé en ce que** le tampon (2) repose sur le bord de l'ouverture de la forme (10 pendant l'introduction de la denrée à l'intérieur de cette forme (10).

2. Procédé selon la revendication 1, **caractérisé en ce que** le tampon (2) obture hermétiquement la forme (10).

3. Procédé selon une ou deux des revendications précédentes, **caractérisé en ce que** la forme (10) est créée par le tampon (2) ou par un élément du tampon (2) déformant la feuille intérieure (1) vers le bas avant l'introduction de la denrée à l'intérieur de la forme (10).

4. Procédé selon une ou plusieurs des revendications précédentes, **caractérisé en ce que** la pression à l'intérieur du volume créée par le tampon (2) obturant la forme est contrôlée par une ouverture de ventilation (22) et **en ce qu'**en particulier l'intérieur (12) de la forme est évacué par cette ouverture de ventilation (22).

5. Procédé selon une ou plusieurs des revendications précédentes, **caractérisé par** un échauffement du tampon à une température comprise entre environ 25°C et 45°C et qui soit de préférence de 35°C.

6. Dispositif de fabrication d'emballages de denrées consistant en la feuille inférieure d'une forme (10) et en un tampon (2) couvrant au moins partiellement cette forme (10), le tampon (2) possédant une ouverture de remplissage (21) par laquelle la denrée peut être introduite dans la forme, **caractérisé en ce que** le tampon (2) repose sur le bord de la forme (10) pendant l'introduction de la denrée.

7. Dispositif selon la revendication 6, **caractérisé en ce que** l'ouverture de remplissage (21) peut être fermée ou ouverte par une valve commandée (4).

8. Dispositif selon une des deux revendications 6 ou 7, **caractérisé en ce que** le tampon (2) possède des surfaces d'étanchéité (25) appuyant sur des surfaces (11) correspondantes de la forme.

9. Dispositif selon une ou plusieurs des revendications 6 à 8, **caractérisé en ce que** le tampon (2) peut être échauffé de telle sorte que la surface (24) du tampon située près de la denrée atteint une température allant d'environ 25°C à 45°C et de préférence de 35°C.

10. Dispositif selon une ou plusieurs des revendications précédentes 6 à 9, **caractérisé en ce que** la surface (24) du tampon possède une forme conique ou cubique à angles arrondis et une couche anti-adhésive.

11. Dispositif selon une ou plusieurs des revendications précédentes 6 à 10, **caractérisé en ce que** le tampon (2) possède une ouverture de remplissage (22) pilotée par une valve (6).
